# FASCICULE DE BREVET EUROPEEN

(11) **EP 0 694 910 B1**
(45) Date de publication et mention de la délivrance du brevet: **19.01.2000**
(21) Numéro de dépôt: 95401685.3
(22) Date de dépôt: 13.07.1995
(51) Int. Cl.: G11B 5/29, G11B 5/49

(54) **Dispositif d'enregistrement et/ou de lecture à têtes magnétiques et son procédé de réalisation**
Aufzeichnungs- oder Wiedergabevorrichtung mit Magnetköpfen und Herstellungsverfahren
Recording or reproducing device with magnetic heads and manufacturing process

(30) Priorité: 26.07.1994 FR 9409224
(43) Date de publication de la demande: 31.01.1996
(73) Titulaire: THOMSON-CSF, 75008 Paris (FR)
(72) Inventeur: Lehureau, Jean-Claude, F-92402 Courbevoie Cedex (FR)
(74) Mandataire: Guérin, Michel

(56) Documents cités:
- EP-A- 0 340 085
- EP-A- 0 407 244
- PATENT ABSTRACTS OF JAPAN vol. 6 no. 112 (P-124) [990] ,23 Juin 1982 & JP-A-57 040725 (FUJITSU K. K.) 6 Mars 1982,

## Description

La présente invention est relative à un dispositif d'enregistrement et/ou de lecture à têtes magnétiques agencées notamment en matrice.

Ce dispositif est destiné à être monté par exemple dans des enregistreurs magnétiques tels que ceux utilisés en informatique ou ceux embarqués, ou bien dans des magnétoscopes, des magnétophones aussi bien professionnels que grand public.

Une tête magnétique est formée d'un circuit magnétique à entrefer associé à au moins un conducteur auquel est appliqué le signal à enregistrer sur un support disposé au voisinage de l'entrefer. Ce signal crée un champ magnétique dans le circuit magnétique et cela sert à aimanter une petite portion du support qui se trouve en vis-à-vis avec l'entrefer.

Pour l'enregistrement et la lecture d'informations on cherche de plus en plus à miniaturiser les têtes de manière à augmenter la densité d'informations sur le support. Pour cela on a été amené à réaliser des têtes en couches minces.

On cherche aussi à associer plusieurs têtes magnétiques de manière à éviter les mouvements de la tête. Cela permet aussi d'augmenter la rapidité d'écriture d'informations sur le support. On a été amené à regrouper plusieurs têtes en lignes ou même en matrice.

Le brevet FR 2 630 853 décrit un dispositif matriciel à têtes magnétiques réalisées en couches minces. Un tel dispositif matriciel est aussi divulgué dans EP-A-0 340 085 bénéficiant de la même priorité que FR-A-2 630 853.

Ce dispositif est formé d'un substrat magnétique rainuré avec des plots disposés en lignes et colonnes. Des conducteurs de lignes et de colonnes sont disposés dans les rainures et recouverts et/ou noyés dans un matériau amagnétique. Une première couche magnétique est déposée sur une colonne de plots sur deux. Cette couche est destinée à former les premiers pôles de chaque tête magnétique. Sur cette première couche magnétique et le reste du substrat, on dépose une couche d'un matériau amagnétique qui englobe un flanc de la première couche. Cette couche amagnétique est destinée à former les entrefers des têtes magnétiques. On dépose ensuite, sur la couche en matériau amagnétique, une seconde couche en matériau magnétique destinée à former les seconds pôles des têtes magnétiques.

Elle surmonte les plots non couverts par la première couche magnétique. Un usinage, un polissage et une découpe permettent de faire affleurer les pôles et de les délimiter ainsi que les entrefers.

Une liaison amagnétique est réalisée sous les seconds pôles formés. Elle relie les entrefers de deux têtes situées dans des colonnes voisines.

Dans ce genre de dispositif, deux têtes magnétiques situées dans des colonnes voisines n'ont pas des performances identiques lors d'un enregistrement provoqué par un même flux car deux entrefers reliés sont symétriques.

Cette différence de performances est encore accrue lorsque l'entrefer au lieu d'être perpendiculaire à la surface du substrat est maintenant incliné.

Un pôle dont la surface supérieure forme un angle aigu avec l'entrefer commence à saturer pour une intensité de flux plus faible qu'un pôle dont la surface supérieure forme un angle obtus avec l'entrefer.

La présente invention concerne un dispositif d'enregistrement et/ou de lecture à têtes magnétiques agencées de manière à éviter cette variabilité de performances. L'invention est définie dans les revendications. Le préambule de la revendication 1 est basé sur EP-A-0 340 085.

Plus précisément, un dispositif à têtes magnétiques selon l'invention comporte au moins deux têtes magnétiques, le circuit magnétique de fermeture du flux magnétique ayant un plot commun aux deux têtes magnétiques. Il est caractérisé en ce qu'un premier pôle d'un premier type couple magnétiquement le plot commun à l'entrefer de la première tête magnétique à travers une liaison amagnétique et un deuxième pôle d'un deuxième type, séparé par un intervalle amagnétique du premier pôle couple magnétiquement le plot commun à l'entrefer de la deuxième tête magnétique.

L'épaisseur et la surface de l'intervalle amagnétique peuvent être telles que le premier pôle de premier type concourt au fonctionnement de la première tête magnétique et que le deuxième pôle de deuxième type concourt au fonctionnement de la deuxième tête.

Dans une variante, l'épaisseur et la surface de l'intervalle amagnétique sont telles que le premier pôle de premier type et le deuxième pôle de deuxième type concourent tous deux au fonctionnement sélectif soit de la première tête soit de la deuxième tête magnétique.

De manière avantageuse, le dispositif à têtes magnétiques peut comporter un substrat magnétique avec au moins une succession de plots communs. Une des têtes magnétiques comprenant deux plots successifs, un pôle de premier type et un pôle de deuxième type ; ces deux pôles surmontant chacun un des plots et venant en vis-à-vis en définissant l'entrefer. Chacun de ces pôles forme une paire avec un autre pôle d'un autre type que lui et qui surmonte le même plot que lui. Cet autre pôle contribue à définir l'entrefer d'une tête voisine. La liaison amagnétique aménagée sous les pôles de premier type étant située pour deux plots consécutifs du même côté de l'intervalle amagnétique.

La liaison amagnétique relie l'entrefer de la première tête magnétique à l'intervalle amagnétique en formant une seule couche. De préférence, l'entrefer de la première tête, l'intervalle amagnétique et la liaison amagnétique ont la même épaisseur.

De manière préférentielle, on s'arrange pour que chaque pôle occupe environ la moitié de la surface d'un plot.

La présente invention concerne un procédé de réalisation du dispositif à têtes magnétiques. Ce procédé consiste à:
- déposer une première couche magnétique sur une partie du plot en aménageant un flanc sur le plot, cette couche étant destinée à former le deuxième pôle de deuxième type ;
- déposer sur le reste du plot et au moins partiellement sur la première couche magnétique en englobant le flanc une couche d'un matériau amagnétique ;
- déposer sur la couche en matériau amagnétique une seconde couche magnétique destinée à former le premier pôle de premier type, la couche en matériau amagnétique étant destinée à former l'intervalle amagnétique, la liaison amagnétique et l'entrefer que couple le premier pôle de premier type ;
- usiner et polir les couches de manière à faire affleurer la première couche ;
- découper le contour des pôles, de l'intervalle amagnétique, de l'entrefer.

L'invention sera mieux comprise et d'autres caractéristiques et avantages de l'invention apparaîtront à la lecture de la description de certains de ses modes de réalisation, celle-ci étant effectuée en se référant aux dessins annexés sur lesquels :
- les figures 1a, 1b représentent des vues partielles respectivement de face et en coupe selon l'axe a-a d'un dispositif matriciel à têtes magnétiques connu ;
- la figure 2 représente une coupe d'une variante d'un dispositif matriciel à têtes magnétiques connu ;
- les figures 3a, 3b représentent des vues partielles respectivement de face et en coupe selon l'axe a-a d'un exemple d'un dispositif matriciel à têtes magnétiques selon l'invention ;
- les figures 4a, 4b une coupe de deux variantes d'un dispositif matriciel à têtes magnétiques selon l'invention ;
- les figures 5a, 5b, 5c des coupes du dispositif matriciel de la figure 3a en cours de réalisation.

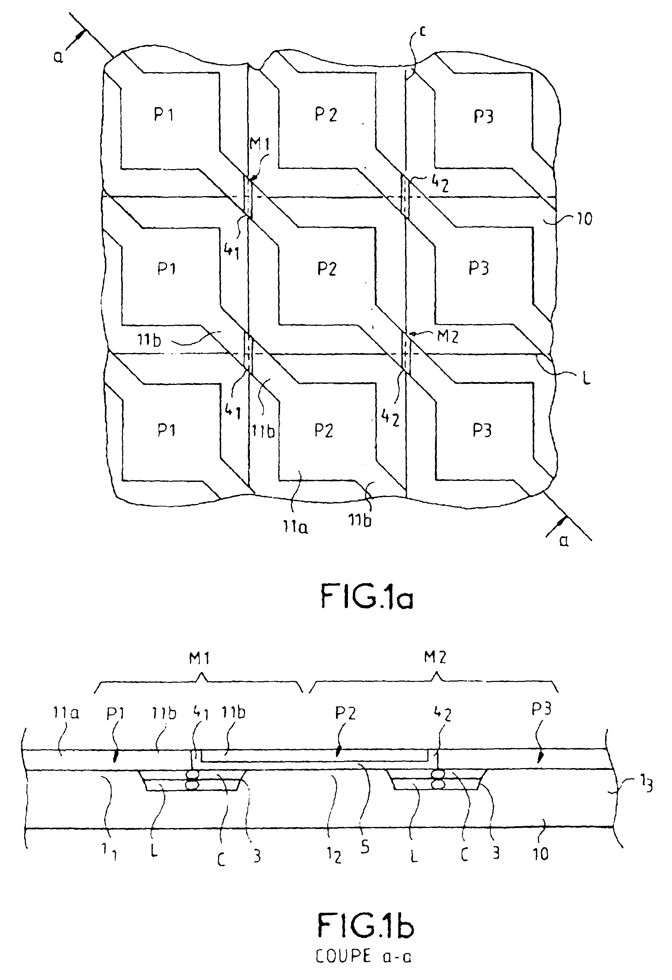

Les figures 1a et 1b représentent des vues partielles respectivement de face et en coupe selon l'axe a-a d'un dispositif matriciel à tête magnétique de type connu.

Ce dispositif est formé d'un substrat 10 magnétique rainuré avec des plots sensiblement carrés en saillie, disposés selon un réseau matriciel. Les plots sont référencés 1₁, 1₂, 1₃..... deux plots d'une même colonne ont la même référence. L'indice porté par chaque plot correspond au rang de la colonne. Les plots ne sont pas visibles sur la figure 1a.

Des conducteurs d'excitation de ligne L et des conducteurs d'excitation de colonne C sont disposés dans les rainures 3 et sont recouverts et/ou noyés dans un matériau amagnétique. Chaque plot 1₁, 1₂, 1₃ est surmonté d'un pôle P1, P2, P3. Les pôles d'une même colonne portent la même référence et le chiffre de cette référence correspond au rang de la colonne. Tous les pôles (sauf bien entendu ceux du bord) ont une partie 11a de plus grande surface qui correspond sensiblement à la surface d'un plot 1₁ et deux avancées 11b qui prolongent deux de leurs coins en diagonale. Ces avancées 11b surmontent l'intersection entre deux rainures 3. Un entrefer 4₁, 4₂ .... est aménagé entre deux avancées 11 b en vis-à-vis. Les entrefers 4₁, 4₂ sont situés au-dessus du croisement d'un conducteur ligne L et d'un conducteur colonne C. Tous les entrefers situés au-dessus du même conducteur colonne C ont le même indice.

Une tête magnétique M1, par exemple, comporte un circuit magnétique de fermeture du flux formé par les deux plots 1₁, 1₂ voisins situés en diagonale dans le réseau matriciel, la portion du substrat 10 qui relie ces deux plots, les pôles P1, P2 qui surmontent chacun de ces plots 1₁, 1₂, l'entrefer 4₁ qui sépare ces deux pôles P1, P2. Elle comporte aussi le conducteur colonne C et le conducteur ligne L qui se croisent au droit de l'entrefer 4₁.

De la même manière, la tête magnétique M2 ayant un plot 1₂ en commun avec la tête magnétique M1 comporte un circuit magnétique formé par les deux plots 1₂ et 1₃, la portion de substrat 10 qui les relie, les deux pôles P2, P3 qui surmontent chacun de ces plots, l'entrefer 4₂ qui sépare les deux pôles P2, P3. Elle comporte aussi les deux conducteurs C, L qui se croisent au droit de l'entrefer 4₂. Ces deux têtes M1 et M2 ont aussi un pôle en commun P2. Le procédé de réalisation des pôles et de l'entrefer consiste à déposer, au niveau d'une colonne de plots sur deux, une première couche magnétique destinée à former les premiers pôles P1, P3 de chaque tête, à recouvrir les autres plots d'une couche amagnétique qui englobe au moins un flanc de la première couche, à recouvrir la couche amagnétique d'une seconde couche magnétique destinée à former les seconds pôles P2 ... de chaque tête.

La couche amagnétique est destinée à former les entrefers 4₁, 4₂. Les dernières étapes sont des étapes d'usinage, de polissage et de découpe qui permettent de faire affleurer les pôles et de les délimiter ainsi que les entrefers.

Dans ce genre de dispositif il subsiste une liaison amagnétique 5 sous les seconds pôles formés P2... et cette liaison amagnétique 5 relie deux entrefers 4₁, 4₂ qui sont situés de part et d'autre des seconds pôles P2.

Les entrefers 4₁, 4₂ reliés par cette liaison 5 amagnétique sont symétriques. Les deux entrefers 4₁ et 4₂ associés à une portion de liaison amagnétique sont orientés en sens inverse. Les deux têtes magnétiques M1, M2 successives qui possèdent ces entrefers 4₁ et 4₂ ne sont pas identiques, elles sont opposées. Cela entraîne des différences de niveaux entre les enregistrements effectués par ces deux têtes, lorsqu'elles sont parcourues par un flux de même intensité.

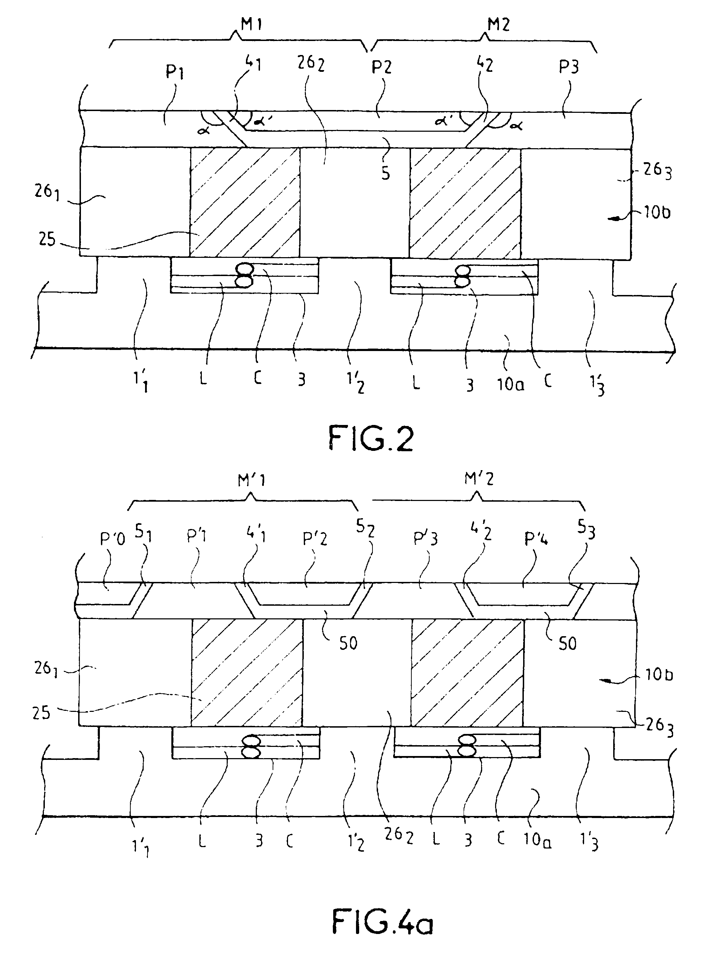

La figure 2 représente en coupe transversale partielle une variante d'un dispositif d'enregistrement et/ou de lecture à têtes magnétiques de type connu. Dans cette variante le substrat magnétique, au lien d'être monobloc est formé par l'assemblage de deux substrats élémentaires superposés. Le premier substrat 10a est rainuré avec des saillies 1₁', 1₂', 1₃' disposées selon un réseau matriciel. Des conducteurs de ligne L et de colonne C sont disposés dans les rainures 3. Le second substrat élémentaire 10b est un substrat composite. Il est formé de pavés magnétiques 26₁, 26₂, 26₃ ... disposés selon le même réseau matriciel et séparés par un matériau amagnétique 25. Les pavés 26₁, 26₂, 26₃.... sont dimensionnés pour recouvrir chacun une saillie 1'₁, 1'₂, 1'₃ ... et le matériau amagnétique 25 recouvre l'espace entre les saillies 1'₁, 1'₂, 1'₃. L'assemblage des deux substrats 10 a et 10b peut se faire par collage. Les saillies 1'₁, 1'₂, 1'₃ recouvertes chacune d'un pavé 26₁, 26₂, 26₃ ... forment des plots.

Les pôles P1, P2, P3 ... et les entrefers 4₁, 4₂, 4₃ sont formés de la même manière que précédemment, les pôles surmontant les pavés 26₁, 262 et les entrefers le matériau amagnétique 25.

Dans cette variante, l'entrefer de chaque tête est incliné par rapport à la surface du substrat composite 10b et les inclinaisons des entrefers 4₁, 4₂ de deux têtes successives ayant un plot commun sont supplémentaires.

Cette inclinaison aggrave encore les différences de performance entre deux têtes ayant des entrefers reliés. On a représenté par α l'angle obtus que fait l'entrefer 4₁ avec la surface supérieure du premier pôle formé P1 et par α' l'angle aigu que fait cet entrefer 4₁ avec la surface supérieure du second pôle formé P2.

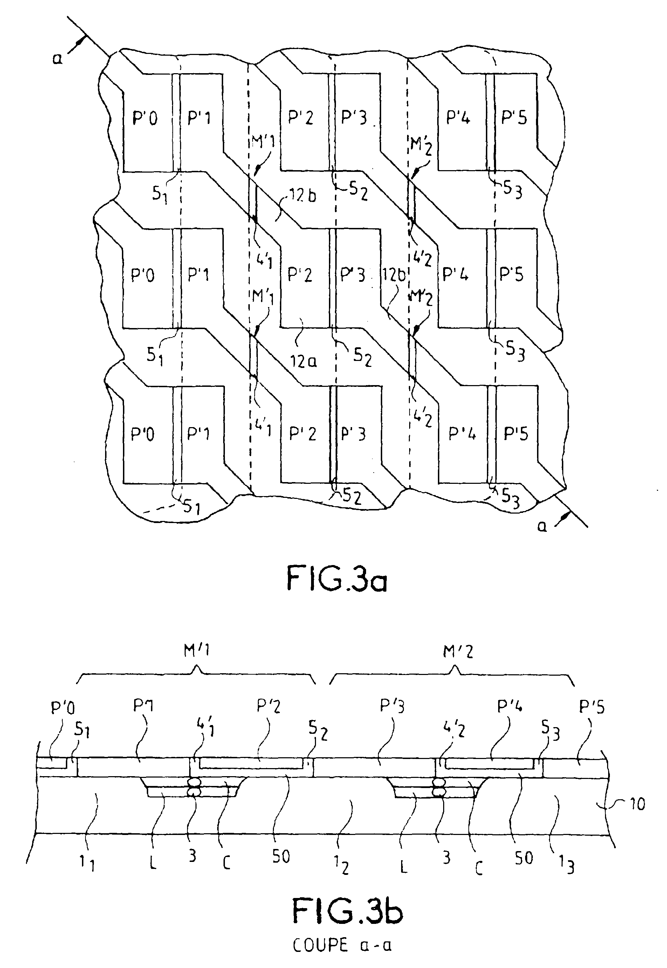

Les figures 3a et 3b représentent des vues partielles respectivement de face et en coupe transversale (selon l'axe b-b) d'un exemple d'un dispositif d'enregistrement et/ou lecture à têtes magnétiques selon l'invention. Ces deux figures sont comparables aux figures 1a et 1b. On retrouve le même substrat rainuré 10 avec des plots en saillie 1₁, 1₂, 1₃ aménagés selon un repère cartésien. Des conducteurs d'excitation de ligne L et de colonne C sont disposés dans les rainures 3 et sont noyés et/ou recouverts dans un matériau amagnétique tels qu'une résine. Pour une plus grande clarté, les conducteurs ne sont visibles que sur la figure 3b. Des pôles P'0, P'1, P'2, P'3, P'4 ... sont disposés sur les plots 1₁, 1₂,... mais maintenant un plot 1₁, 1₂, est recouvert par une paire de pôles respectivement P'0, P'1 pour le plot 1₁, P'2 et P'3 pour le plot 1₂ etc... Dans une paire de pôles, par exemple P'2, P'3, un premier pôle P'2 de premier type couple magnétiquement le pôle 1₂ à l'entrefer 4'₁ d'une première tête magnétique M'1 à travers une liaison amagnétique 50. Le deuxième pôle P'3 de deuxième type couple magnétiquement le plot 1₂ à l'entrefer 4'₂ d'une deuxième tête magnétique M'2. Le pôle de premier type P'3 est séparé du pôle P'2 de deuxième type par un intervalle amagnétique 5₂.

Dans l'exemple représenté sur les figures 3a, 3b, l'intervalle amagnétique qui surmonte un plot porte le même indice que lui. Les intervalles amagnétiques qui surmontent des plots d'une même colonne sont de préférence alignés. Les plots 1₁, 1₂ ... sont des plots communs à deux têtes magnétiques. Les pôles P'0, P'1, P'2 ont une partie 12a de plus grande surface qui correspond à environ la moitié de la surface d'un plot 1₁, 1₂, 1₃... et au moins une avancée 12b qui prolonge un de leur coin vers un croisement de conducteurs d'excitation C, L. Les avancées 12b des deux pôles, par exemple P'2, P'3, surmontant un même plot 1₂ sont dirigées de préférence selon une diagonale du plot 1₂. Les entrefers 4'₁, 4'₂ ... sont aménagés entre deux avancées 12b en vis-à-vis. Ces entrefers 4'₁, 4'₂ ... sont situés au-dessus du croisement d'un conducteur de ligne L et d'un conducteur de colonne C au-dessus d'une rainure 3. Les entrefers 4'₁ d'une même colonne sont disposés de préférence alignés. Les lignes d'entrefers et d'intervalles amagnétiques sont de préférence sensiblement parallèles.

La tête magnétique M'1 comporte un circuit magnétique de fermeture du flux formé par le plot 1₁, le plot 1₂, la portion du substrat 10 qui les relie, le pôle P'1, le pôle P'2 et l'entrefer 4'₁ qui les sépare. Elle comporte aussi le conducteur colonne C et le conducteur ligne L qui se croisent au droit de l'entrefer 4'₁.

De la même manière la tête magnétique M'2 qui a le plot 1₂ en commun avec la tête M'1 comporte un circuit magnétique formé par le plot commun 1₂, le plot 1₃ et la portion de substrat qui les relie, les pôles P'3 et P'4, l'entrefer 4'₂ qui sépare ces deux pôles. Elle comporte aussi les conducteurs de ligne L et de colonne C qui se croisent au droit de l'entrefer 4'₂.

Les deux pôles P'2, P'3 d'une paire contribuent à définir deux entrefers 4'₁, 4'₂ appartenant à des têtes M'1, M'2 successives. Le pôle P'2 de premier type concourt au fonctionnement de la tête M'1 et le pôle P'3 de deuxième type au fonctionnement de la tête M'2. Toutefois, il se peut, si l'épaisseur et la surface de l'intervalle amagnétique 5₂ sont convenables que les deux pôles de la paire P'2 et P'3 concourent tous deux au fonctionnement sélectif soit de la première tête magnétique M'1 soit de la deuxième tête magnétique M'2.

Dans l'exemple décrit, la liaison amagnétique 50 relie un intervalle amagnétique 5₂, en passant sous un des pôles P'2 de premier type d'une paire surmontant le même plot 1₂ que l'intervalle 5₂, à l'entrefer 4'₁ que contribue à définir le pôle P'2 de premier type de la paire. L'intervalle amagnétique 5₂, l'entrefer 4'₁ et la liaison amagnétique 50 sont formés d'une même couche de matériau amagnétique. De préférence, l'intervalle amagnétique 5₂, l'entrefer 4'₁ et la liaison amagnétique ont la même épaisseur.

Au niveau de deux plots consécutifs 1₁, 1₂, 1₃, cette liaison 50 est située du même côté de l'intervalle amagnétique 5₂, 5₃ auquel elle est reliée.

La figure 3b montre bien que maintenant deux têtes consécutives M'1, M'2 sont identiques au niveau des pôles et des entrefers. Les entrefers 4'₁, 4'₂ de ces deux têtes ne sont plus reliés. Lorsqu'elles sont parcourues par des flux de même intensité elles génèrent un même niveau d'inscription.

La figure 4a représente de la même manière que la figure 2 une coupe partielle d'une variante d'un dispositif à têtes magnétiques selon l'invention.

Le substrat magnétique est formé par l'assemblage de deux substrats élémentaires superposés 10a et 10b et ces substrats sont identiques à ceux de la figure 2.

Les pôles P'0, P'1, P'2, P'3, P'4 sont formés au-dessus du substrat élémentaire 10b composite ainsi que les entrefer 4'₁, 4'₂.

Les pavés magnétiques 26₁, 26₂ ... du substrat magnétique sont recouverts chacun de deux pôles respectivement P'0 et P'1, P'2 et P'3 etc. et ces deux pôles sont séparés par l'intervalle amagnétique respectivement 5₁, 5₂ ... Les pavés magnétiques contribuent à former les plots. On retrouve aussi les liaisons amagnétiques 50 entre un intervalle amagnétique 5₂ et un entrefer 4'₁ en passant sous un pôle P'2 de premier type.

Mais maintenant les entrefers 4'₁ et 4'₂ sont inclinés au lieu d'être perpendiculaires à la surface du substrat composite 10b et donc des plots. Les entrefers 4'₁ et 4'₂ de deux têtes magnétiques successives M'1 et M'2 ont, de préférence, sensiblement la même inclinaison. Les différences de performances de deux têtes magnétiques M'1, M'2 successives ayant un plot commun sont supprimées. Dans cette variante les intervalles amagnétiques 5₁, 5₂ sont aussi inclinés par rapport à la surface du substrat composite 10b et donc des plots. Les inclinaisons de deux intervalles amagnétiques 5₁, 5₂ sont de préférence sensiblement les mêmes.

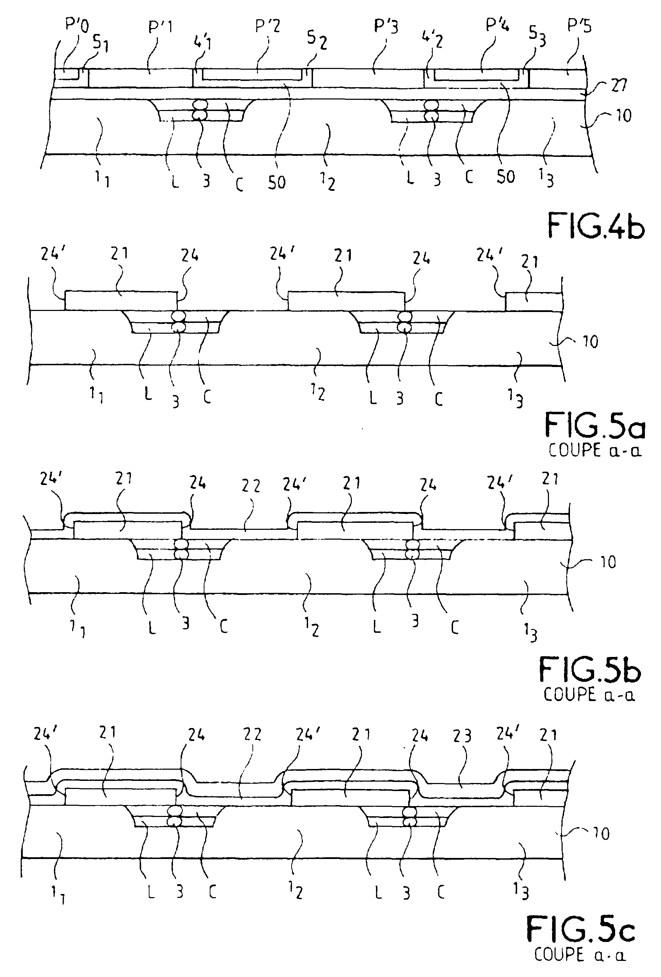

La figure 4b montre une coupe partielle d'un dispositif d'enregistrement et/ou lecture à têtes magnétiques selon l'invention comparable à celui des figures 3a, 3b.

Dans cette variante, les rainures 3 du substrat magnétique 10 ne sont plus emplies d'un matériau magnétique tel qu'une résine.

Une plaque 27 d'un matériau amagnétique recouvre le substrat 10 et les pôles P'0, P'1, P'2..., les entrefers 4'₁, 4'₂ et les intervalles amagnétiques 5₁, 5₂, 5₃ sont déposés sur la plaque 27.

Les figures 5a, 5b, 5c à regarder en liaison avec les figures 3a et 3b montrent en coupes partielles un dispositif à têtes magnétiques au cours de sa réalisation.

On part d'un substrat magnétique 10, en ferrite par exemple, rainuré avec les plots 1₁, 1₂, 1₃ disposés selon un réseau matriciel et comportant les conducteurs de ligne L et de colonne C. Ces conducteurs sont disposés dans les rainures 3 et noyés dans un matériau amagnétique tel que du verre par exemple.

Au lieu de noyer les conducteurs de ligne L et colonne C dans un matériau amagnétique on peut aussi recouvrir le substrat 10 d'une plaque amagnétique (non représentée).

Pour former en couches minces les pôles, les entrefers, les intervalles amagnétique, on procède de la manière suivante :

On dépose d'abord une première couche 21 en matériau magnétique au-dessus du substrat 10 ou de la plaque amagnétique. Cette couche 21 forme des bandes dirigées selon les colonnes de plots et elles recouvrent une partie de chaque plot 1₁, 1₂, 1₃. Cette couche aura un flanc 24' sur les plots 1₁, 1₂, 1₃.

Cette couche 21 est destinée à former un pôle P'1, P'3, P'5 de deuxième type de chaque paire de pôles (figure 5a).

Pour réaliser ce dépôt on utilise un premier masque dont le contour est représenté en pointillés sur la figure 3a. Ce masque est destiné à protéger les zones devant être recouvertes de matériau amagnétique. Ce masque a un bord qui passe par les entrefers 4'₁, 4'₂ et par les intervalles amagnétiques 5₁, 5₂, 5₃. De cette manière la première couche magnétique 21 a un flanc 24 au-dessus des rainures entre deux plots.

La deuxième étape consiste à déposer une couche 22 de matériau amagnétique. Elle a une épaisseur inférieure à celle de la première couche magnétique 21. Cette couche amagnétique 22 couvre la surface du substrat ou de la plaque et remonte sur la première couche 21 de manière à englober ses flancs 24 et 24'. Sur la figure 5b, la couche 22 amagnétique recouvre entièrement la première couche 21 magnétique mais ce n'est pas une obligation, il suffit qu'elle englobe ses flancs.

Cette couche amagnétique 22 est destinée à former les entrefers 4'₁, 4'₂, les intervalles amagnétiques 5₁, 5₂ et les liaisons amagnétiques 50.

Dans une troisième étape, on dépose une seconde couche magnétique 23 sur la couche amagnétique 22. Elle est destinée à former les pôles P'0,P'2, P'4 de premier type des paires de pôles (figure 5c).

L'étape suivante consiste à usiner et polir les couches ainsi déposées de manière à faire affleurer la première couche magnétique 21.

Ensuite on découpe le contour des pôles. Dans l'exemple décrit chaque pôle P'0, P'1, ... occupe sensiblement la moitié de la surface d'un plot 1₁, 1₂ ... . D'autres configurations sont possibles. La découpe délimite aussi les entrefers et les intervalles amagnétiques. Il est préférable que les intervalles amagnétiques 5₂ soient entièrement contenus sur la surface des plots de manière à éviter des champs de fuite.

Cette étape peut se faire par photogravure chimique ou ionique avec un second masque qui protège les zones à conserver. La figure 3b montre le dispositif à têtes magnétiques ainsi obtenu.

En variante au lieu d'utiliser un substrat monobloc, on peut utiliser un substrat, formé par l'assemblage de deux substrats élémentaires superposés, tel que celui représenté à la figure 4a. Le premier substrat élémentaire 10a est obtenu de manière classique en rainurant un bloc de matériau magnétique tel que de la ferrite pour obtenir les saillies 1'₁, 1'₂, 1'₃.

Le second substrat élémentaire 10b est obtenu en rainurant un bloc de matériau magnétique, pour obtenir les pavés 26₁, 26₂, en remplissant les rainures d'un matériau magnétique 25. On assemble les deux substrats 10a, 10b par collage par exemple de manière à ce que les saillies 1'₁, 1'₂ soient recouverte des pavés 26₁, 26₂. On supprime ensuite par usinage l'embase du second substrat 10b. Les conducteurs de ligne L et colonne C sont disposés dans les rainures du premier substrat 10a. Les pôles, les entrefers et les intervalles amagnétiques sont ensuite déposés sur le second substrat 10b.

Tous les exemples décrits concernent un dispositif d'enregistrement et/ou de lecture à têtes magnétiques agencées selon un réseau matriciel. Il va de soit que le dispositif d'enregistrement et/ou de lecture selon l'invention peut avoir des têtes magnétiques agencées autrement en ligne, par exemple, de manière à former une barrette. Au lieu d'être rectilignes les conducteurs d'excitation seraient alors bobinés autour des plots.

Sur les figures qui ne sont que des exemples de réalisation, les pôles sont situés sur les faces supérieures des plots et ces faces forment une surface sensiblement plane. Il est envisageable que cette surface soit légèrement courbe.

Dans ce qui précède plusieurs variantes de substrat et de pôles ont été décrites, il est bien sur possible de combiner entre elles ces variantes.

## Revendications

1. Dispositif à têtes magnétiques d'enregistrement et/ou de lecture comportant au moins deux têtes magnétiques (M'1, M'2), le circuit magnétique de fermeture du flux magnétique possédant un plot (1₂) commun aux deux têtes (M'1, M'2) magnétiques, caractérisé en ce qu'un premier pôle (P'2) d'un premier type couple magnétiquement le plot commun (1₂) à l'entrefer (4'₁) de la première tête magnétique (M'1) à travers une liaison amagnétique (50), un deuxième pôle (P'3) d'un deuxième type, séparé du premier pôle (P'2) par un intervalle amagnétique (5₂), couple magnétiquement le plot commun (1₂) à l'entrefer (4'₂) de la deuxième tête magnétique (M'2).

2. Dispositif à têtes magnétiques selon la revendication 1, caractérisé en ce que l'épaisseur et la surface de l'intervalle amagnétique (5₂) sont telles que le premier pôle (P'2) de premier type concourt au fonctionnement de la première tête magnétique (M'1) et que le deuxième pôle (P'3) de deuxième type concourt au fonctionnement de la deuxième tête magnétique (M'2).

3. Dispositif à têtes magnétiques selon la revendication 1, caractérisé en ce que l'épaisseur et la surface de l'intervalle amagnétique (5₂) sont telles que le premier pôle (P'2) de premier type et le deuxième pôle (P'3) de deuxième type concourent tous deux au fonctionnement sélectif soit de la première tête magnétique (M'1) soit de la deuxième tête magnétique (M'2).

4. Dispositif à têtes magnétiques selon l'une des revendications 1 à 3, caractérisé en ce qu'il comporte un substrat (10) magnétique avec au moins une succession de plots communs (1₂, 1₃),
une des têtes magnétiques (M'2) comprenant deux plots consécutifs (1₂, 1₃) ainsi qu'un pôle (P'4) de premier type et un pôle (P'3) de deuxième type, ces deux pôles (P'3, P'4) surmontant chacun un des plots (1₂, 1₃) et venant en vis-à-vis en définissant l'entrefer (4'₂),
chacun de ces pôles (P'3, P'4) forme une paire avec un autre pôle (P'2, P'5) d'un autre type que lui, surmontant le même plot (1₂, 1₃) que lui, l'autre pôle (P'2, P'5) contribuant à définir l'entrefer (4'1) d'une tête voisine (M'1),
la liaison amagnétique (50) aménagée sous les pôles (P'2, P'4) de premier type étant située pour les deux plots consécutifs (1₂, 1₃) du même côté de l'intervalle amagnétique (5₂, 5₃).

5. Dispositif à têtes magnétiques selon la revendication 1, caractérisé en ce que la liaison amagnétique (50) relie l'entrefer (4'₁) de la première tête magnétique (M'1) à l'intervalle amagnétique (5₂) en formant une seule couche.

6. Dispositif à têtes magnétiques selon la revendication 5, caractérisé en ce que l'intervalle amagnétique (5₂), l'entrefer (4'₁) et la liaison amagnétique (50) ont la même épaisseur.

7. Dispositif à têtes magnétiques selon l'une des revendications 1 à 6, caractérisé en ce que chaque pôle (P'2, P'3) occupe environ la moitié de la surface d'un plot (1₂).

8. Dispositif à têtes magnétiques selon l'une des revendications 4 à 7, caractérisé en ce que les pôles (P'2), P'3) sont situés sur les faces supérieures des plots (1₂), ces faces formant une surface plane ou légèrement courbe.

9. Dispositif à têtes magnétiques selon l'une des revendications 1 à 8, caractérisé en ce que l'intervalle amagnétique (5₂) est entièrement contenu sur la surface du plot (1₂).

10. Dispositif à têtes magnétiques selon l'une des revendications 4 à 9, caractérisé en ce que les plots (1₁, 1₂) sont disposés selon un réseau matriciel.

11. Dispositif à têtes magnétiques selon la revendication 10, caractérisé en ce que les entrefers (4'₁, 4'₂) sont disposés selon des lignes.

12. Dispositif à têtes magnétiques selon l'une des revendications 10 ou 11, caractérisé en ce que les intervalles amagnétique (5₁, 5₂, 5₃) sont disposés selon des lignes.

13. Dispositif à têtes magnétiques selon l'une des revendications 11 ou 12, caractérisé en ce que les lignes d'entrefers (4'₁, 4'₂) sont sensiblement parallèles aux lignes d'intervalles amagnétique (5₁, 5₂, 5₃).

14. Dispositif à têtes magnétiques selon l'une des revendications 1 à 13, caractérisé en ce que l'entrefer (4'₁, 4'₂) d'une tête magnétique (M'1) est incliné par rapport à la surface du plot (1'₂) commun.

15. Dispositif à têtes magnétiques selon la revendication 14, caractérisé en ce que deux entrefers successifs (4'₁, 4'₂) ont sensiblement la même inclinaison.

16. Dispositif à têtes magnétiques selon l'une des revendications 1 à 15, caractérisé en ce que l'intervalle amagnétique (5₂) surmontant le plot (1'₂) est incliné par rapport à la surface du plot (1'₂) commun.

17. Dispositif à têtes magnétiques selon la revendication 16, caractérisé en ce que deux intervalles amagnétiques successifs (5₁, 5₂) ont sensiblement la même inclinaison.

18. Dispositif à têtes magnétiques selon l'une des revendications 1 à 17, caractérisé en ce qu'au moins un conducteur d'excitation (L, C) est disposé autour du plot (1₂) commun.

19. Procédé de réalisation d'un dispositif selon l'une des revendications 1 à 18, consistant à :
- déposer une première couche magnétique (21) sur une partie du plot (1₂) en aménageant un flanc (24') sur le plot (1₂), cette couche (21) étant destinée à former le deuxième pôle (P'3) de deuxième type ;
- déposer sur le reste du plot (1₂) et au moins partiellement sur la première couche (21) en englobant le flanc (24') une couche (22) d'un matériau amagnétique ;
- déposer sur la couche (22) en matériau amagnétique une seconde couche magnétique (23) destinée à former le premier pôle (P'2) de premier type, la couche en matériau amagnétique (22) étant destinée à former l'intervalle amagnétique (5₂), la liaison amagnétique (50) et l'entrefer (4'₁) que couple le premier pôle (P'2) de premier type ;
- usiner et polir les couches (21, 22, 23) de manière à faire affleurer la première couche (21) magnétique ;
- découper le contour des pôles (P'2, P'3), de l'intervalle amagnétique, de l'entrefer.

20. Procédé selon la revendication 19, caractérisé en ce qu'il consiste à déposer la première couche magnétique (21) sur un substrat magnétique (10) muni d'au moins une succession de plots (1₂, 1₃, 1₄) communs.

21. Procédé selon la revendication 19, caractérisé en ce qu'il consiste à prévoir un flanc (24) de la première couche magnétique (21) entre deux plots (1₂, 1₃).

22. Procédé de réalisation selon l'une des revendications 19 à 21, caractérisé en ce qu'il consiste à donner à la couche amagnétique (22) une épaisseur plus faible que celle de la première couche magnétique (21).

23. Procédé de réalisation selon l'une des revendications 19 à 22, caractérisé en ce qu'il consiste à disposer au moins un conducteur d'excitation (C, L) autour du plot commun (1₂).

24. Procédé de réalisation selon la revendication 23, caractérisé en ce qu'il comporte une étape consistant à noyer le conducteur d'excitation (C, L) dans du matériau amagnétique.

25. Procédé de réalisation selon l'une des revendications 19 à 24, caractérisé en ce qu'il comporte une étape consistant à intercaler une plaque amagnétique (27) sur le plot commun (1₂) avant les étapes de dépôt.

26. Procédé de réalisation selon l'une des revendications 20 à 25, caractérisé en ce qu'il consiste à réaliser le substrat (10) en assemblant deux substrats élémentaires (10a, 10b) superposés, le substrat élémentaire inférieur (10a) comportant au moins une succession de saillies (1'₁, 1'₂, 1'₃), le substrat élémentaire supérieur comportant des pavés magnétiques (26₁, 26₂, 26₃) séparés par du matériau amagnétique (25), un pavé magnétique (26₁, 26₂, 26₃) recouvrant une saillie (1'₁, 1'₂) lors de l'assemblage.

## Patentansprüche

1. Vorrichtung mit Magnetköpfen zur Aufnahme und/oder zur Wiedergabe, die wenigstens zwei Magnetköpfe (M'1, M'2) aufweist, wobei der Magnetkreis zum Schließen des Magnetflusses ein den beiden Magnetköpfen (M'1, M'2) gemeinsames Kontaktstück (1₂) besitzt, dadurch gekennzeichnet, daß ein erster Pol (P'2) eines ersten Typs das gemeinsame Kontaktstück (1₂) über eine nichtmagnetische Verbindung (50) mit dem Spalt (4'₁) des ersten Magnetkopfs (M'1) koppelt und ein zweiter Pol (P'3) eines zweiten Typs, der von dem ersten Pol (P'2) durch einen nichtmagnetischen Zwischenraum (52) getrennt ist, das gemeinsame Kontaktstück (1₂) mit dem Spalt (4'₂) des zweiten Magnetkopfs (M'2) magnetisch koppelt.

2. Vorrichtung mit Magnetköpfen nach Anspruch 1, dadurch gekennzeichnet, daß die Dicke und die Fläche des nichtmagnetischen Zwischenraums (5₂) derart sind, daß der erste Pol (P'2) des ersten Typs beim Betrieb des ersten Magnetkopfs (M'1) mitwirkt und daß der zweite Pol (P'3) des zweiten Typs beim Betrieb des zweiten Magnetkopfs (M'2) mitwirkt.

3. Vorrichtung mit Magnetköpfen nach Anspruch 1, dadurch gekennzeichnet, daß die Dicke und die Fläche des nichtmagnetischen Zwischenraums (5₂) derart sind, daß der erste Pol (P'2) des ersten Typs und der zweite Pol (P'3) des zweiten Typs alle beide beim selektiven Betrieb des ersten Magnetkopfs (M'1) oder des zweiten Magnetkopfs (M'2) mitwirken.

4. Vorrichtung mit Magnetköpfen nach einem der Ansprüche 1 bis 3, dadurch gekennzeichnet, daß sie ein Magnetsubstrat (10) mit wenigstens einer Abfolge von gemeinsamen Kontaktstücken (1₂, 1₃) aufweist,
wobei einer der Magnetköpfe (M'2) zwei aufeinanderfolgende Kontaktstücke (1₂, 1₃) sowie einen Pol (P'4) des ersten Typs und einen Pol (P'3) des zweiten Typs aufweist, wobei diese beiden Pole (P'3, P'4) jeweils eines der Kontaktstücke (1₂, 1₃) überragen und gegenüber gelangen, wobei sie den Spalt (4'₂) bilden,
wobei jeder dieser Pole (P'3, P'4) ein Paar mit einem anderen Pol (P'2, P'5) eines anderen Typs als ihm bildet, der das gleiche Kontaktstück (1₂, 1₃) wie er überragt, wobei der andere Pol (P'2, P'5) zu Bildung des Spalts (4'1) eines benachbarten Kopfs (M'1) beiträgt, und
wobei die unter den Polen (P'2, P'4) des ersten Typs vorgesehene nichtmagnetische Verbindung (50) für die beiden aufeinanderfolgenden Kontaktstücke (1₂, 1₃) auf der gleichen Seite des nichtmagnetischen Zwischenraums (5₂, 5₃) liegt.

5. Vorrichtung mit Magnetköpfen nach Anspruch 1, dadurch gekennzeichnet, daß die nichtmagnetische Verbindung (50) den Spalt (4'₁) des ersten Magnetkopfs (M'1) mit dem nichtmagnetischen Zwischenraum (5₂) verbindet, wobei eine einzige Schicht gebildet wird.

6. Vorrichtung mit Magnetköpfen nach Anspruch 5, dadurch gekennzeichnet, daß der nichtmagnetische Zwischenraum (5₂), der Spalt (4'₁) und die nichtmagnetische Verbindung (50) die gleiche Dicke haben.

7. Vorrichtung mit Magnetköpfen nach einem der Ansprüche 1 bis 6, dadurch gekennzeichnet, daß jeder Pol (P'2, P'3) etwa die Hälfte der Fläche eines Kontaktstücks (1₂) einnimmt.

8. Vorrichtung mit Magnetköpfen nach einem der Ansprüche 4 bis 7, dadurch gekennzeichnet, daß die Pole (P'2, P'3) an den Oberseiten der Kontaktstücke (1₂) liegen, wobei diese Seiten eine ebene oder leicht gekrümmte Fläche bilden.

9. Vorrichtung mit Magnetköpfen nach einem der Ansprüche 1 bis 8, dadurch gekennzeichnet, daß der nichtmagnetische Zwischenraum (52) ganz in der Fläche des Kontaktstücks (1₂) enthalten ist.

10. Vorrichtung mit Magnetköpfen nach einem der Ansprüche 4 bis 9, dadurch gekennzeichnet, daß die Kontaktstücke (1₁, 1₂) nach einem Matrixnetz angeordnet sind.

11. Vorrichtung mit Magnetköpfen nach Anspruch 10, dadurch gekennzeichnet, daß die Spalte (4'₁, 4'₂) nach Linien angeordnet sind.

12. Vorrichtung mit Magnetköpfen nach einem der Ansprüche 10 oder 11, dadurch gekennzeichnet, daß die nichtmagnetischen Zwischenräume (5₁, 5₂, 5₃) nach Linien angeordnet sind.

13. Vorrichtung mit Magnetköpfen nach einem der Ansprüche 11 oder 12, dadurch gekennzeichnet, daß die Linien von Spalten (4'₁, 4'₂) im wesentlichen parallel zu den Linien von nichtmagnetischen Zwischenrämen (5₁, 5₂, 5₃) sind.

14. Vorrichtung mit Magnetköpfen nach einem der Ansprüche 1 bis 13, dadurch gekennzeichnet, daß der Spalt (4'₁, 4'₂) eines Magnetkopfs (M'1) bezüglich der Fläche des gemeinsamen Kontaktstücks (1'₂) geneigt ist.

15. Vorrichtung mit Magnetköpfen nach Anspruch 14, dadurch gekennzeichnet, daß zwei nacheinanderfolgende Spalte (4'₁, 4'₂) im wesentlichen die gleiche Neigung haben.

16. Vorrichtung mit Magnetköpfen nach einem der Ansprüche 1 bis 15, dadurch gekennzeichnet, daß der das Kontaktstück (1'₂) überragende nichtmagnetische Zwischenraum (5₂) bezüglich der Fläche des gemeinsamen Kontaktstücks (1'₂) geneigt ist.

17. Vorrichtung mit Magnetköpfen nach Anspruch 16, dadurch gekennzeichnet, daß zwei aufeinanderfolgende nichtmagnetische Zwischenräume (5₁, 5₂) im wesentlichen die gleiche Neigung haben.

18. Vorrichtung mit Magnetköpfen nach einem der Ansprüche 1 bis 17, dadurch gekennzeichnet, daß wenigstens ein Erregerleiter (L, C) um das gemeinsame Kontaktstück (1₂) angeordnet ist.

19. Verfahren zur Herstellung einer Vorrichtung nach einem der Ansprüche 1 bis 18, das in folgendem besteht:
- eine erste Magnetschicht (21) wird auf einem Teil des Kontaktstücks (1₂) aufgebracht, wobei eine Seitenwand (24') an dem Kontaktstück (1₂) vorgesehen wird, wobei diese Schicht (21) dazu bestimmt ist, den zweiten Pol (P'3) des zweiten Typs zu bilden;
- auf dem restlichen Kontaktstück (1₂) und wenigstens teilweise auf der ersten Schicht (21) wird eine Schicht (22) aus einem nichtmagnetischen Material aufgebracht, wobei die Seitenwand (24') umschlossen wird;
- auf der Schicht (22) aus nichtmagnetischem Material wird eine zweite Magnetschicht (23) aufgebracht, die dazu bestimmt ist, den ersten Pol (P'2) des ersten Typs zu bilden, wobei die Schicht aus nichtmagnetischem Material (22) dazu bestimmt ist, den nichtmagnetischen Zwischenraum (5₂), die nichtmagnetische Verbindung (50) und den Spalt (4'₁) zu bilden, die der erste Pol (P'2) des ersten Typs koppelt;
- die Schichten (21, 22, 23) werden derart bearbeitet und poliert, daß die erste Magnetschicht (21) bündig gemacht wird;
- die Kontur der Pole (P'2, P'3), des nichtmagnetischen Zwischenraums und des Spalts wird zugeschnitten.

20. Verfahren nach Anspruch 19, dadurch gekennzeichnet, daß es darin besteht, die erste Magnetschicht (21) auf einem Magnetsubstrat (10) aufzubringen, das mit wenigstens einer Abfolge von gemeinsamen Kontaktstücken (1₂, 1₃, 1₄) versehen ist.

21. Verfahren nach Anspruch 19, dadurch gekennzeichnet, daß es darin besteht, eine Seitenwand (24) der ersten Magnetschicht (21) zwischen zwei Kontaktstücken (1₂, 1₃) vorzusehen.

22. Herstellungsverfahren nach einem der Ansprüche 19 bis 21, dadurch gekennzeichnet, daß es darin besteht, der nichtmagnetischen Schicht (22) eine geringere Dicke als der ersten Magnetschicht (21) zu geben.

23. Herstellungsverfahren nach einem der Ansprüche 19 bis 22, dadurch gekennzeichnet, daß es darin besteht, wenigstens einen Erregerleiter (C, L) um das gemeinsame Kontaktstück (1₂) anzuordnen.

24. Herstellungsverfahren nach Anspruch 23, dadurch gekennzeichnet, daß es einen Schritt umfaßt, der darin besteht, den Erregerleiter (C, L) in nichtmagnetischem Material einzubetten.

25. Herstellungsverfahren nach einem der Ansprüche 19 bis 24, dadurch gekennzeichnet, daß es einen Schritt umfaßt, der darin besteht, vor den Schritten des Aufbringens eine nichtmagnetische Platte (27) auf dem gemeinsamen Kontaktstück (1₂) einzuschieben.

26. Herstellungsverfahren nach einem der Ansprüche 20 bis 25, dadurch gekennzeichnet, daß es darin besteht, das Substrat (10) herzustellen, indem zwei übereinandergelegte Elementarsubstrate (10a, 10b) zusammengefügt werden, wobei das untere Elementarsubstrat (10a) wenigstens eine Abfolge von Vorsprüngen (1'₁, 1'₂, 1'₃) aufweist und das obere Elementarsubstrat magnetische Klötze (26₁, 26₂, 26₃) aufweist, die durch nichtmagnetisches Material (25) getrennt sind, wobei ein magnetischer Klotz (26₁, 26₂, 26₃) beim Zusammenfügen einen Vorsprung (1'₁, 1'₂) überdeckt.

## Claims

1. Device with magnetic recording and/or reading heads, comprising at least two magnetic heads (M'1, M'2), the magnetic circuit for closing the magnetic flux having a contact block (1₂) common to both magnetic heads (M'1, M'2), characterised in that a first pole (P'2) of a first type magnetically connects the common contact block (1₂) to the gap (4'₁) of the first magnetic head (M'1) through a non-magnetic connection (50), and a second pole (P'3) of a second type, separated from the first pole (P'2) by a non-magnetic interval (5₂), magnetically connects the common contact block (1₂) to the gap (4'₂) of the second magnetic head (M'2).

2. Magnetic head device according to claim 1, characterised in that the thickness and the surface of the non-magnetic interval (5₂) are such that the first pole (P'2) of the first type cooperates in the functioning of the first magnetic head (M'1) and that the second pole (P'3) of the second type cooperates in the functioning of the second magnetic head (M'2).

3. Magnetic head device according to claim 1, characterised in that the thickness and the surface of the non-magnetic interval (5₂) are such that the first pole (P'2) of the first type and the second pole (P'3) of the second type both cooperate in the selective functioning either of the first magnetic head (M'2) or of the second magnetic head (M'2).

4. Magnetic head device according to any of claims 1 to 3, characterised in that it has a magnetic substrate (10) with at least one succession of common contact blocks (1₂, 1₃),
one of the magnetic heads (M'2) featuring two consecutive contact blocks (1₂, 1₃), along with a pole (P'4) of the first type and a pole (P'3) of the second type, these two poles (P'3, P'4) each topping one of the contact blocks (1₂, 1₃) and being brought opposite one another so as to define the gap (4'₂),
each of these poles (P'3, P'4) forming a pair with another pole (P'2, P'5) of a type other than itself, topping the same contact block (1₂, 1₃) as itself, and the other pole (P'2, P'5) helping to define the gap (4'1) of a neighbouring head (M'1),
the non-magnetic connection (50) provided beneath the poles (P'2, P'4) of the first type being situated, in respect of the two consecutive contact blocks (1₂, 1₃) on the same side of the non-magnetic interval (5₂, 5₃).

5. Magnetic head device according to claim 1, characterised in that the non-magnetic connection (50) links the gap (4'₁) of the first magnetic head (M'1) to the non-magnetic interval (5₂), forming a single layer.

6. Magnetic head device according to claim 5, characterised in that the non-magnetic interval (5₂), the gap (4'₁) and the non-magnetic connection (50) are of the same thickness.

7. Magnetic head device according to any of claims 1 to 6, characterised in that each pole (P'2, P'3) takes up approximately half the surface of a contact block (1₂).

8. Magnetic head device according to any of claims 4 to 7, characterised in that the poles (P'2, P'3) are situated on the upper faces of the contact blocks (1₂), these faces forming a plane or slightly curved surface.

9. Magnetic head device according to any of claims 1 to 8, characterised in that the non-magnetic interval (5₂) is entirely contained on the surface of the contact block (1₂).

10. Magnetic head device according to any of claims 4 to 9, characterised in that the contact blocks (1₁, 1₂) are organised in a matrix network.

11. Magnetic head device according to claim 10, characterised in that the gaps (4'₁, 4'₂) are organised in lines.

12. Magnetic head device according to either of claims 10 and 11, characterised in that the non-magnetic intervals (5₁, 5₂, 5₃) are organised in lines.

13. Magnetic head device according to either of claims 11 and 12, characterised in that the lines of gaps (4'₁, 4'₂) are substantially parallel to the lines of non-magnetic intervals (5₁, 5₂, 5₃).

14. Magnetic head device according to any of claims 1 to 13, characterised in that the gap (4'₁, 4'₂) of one magnetic head (M'1) is inclined with respect to the surface of the common contact block (1'₂).

15. Magnetic head device according to claim 14, characterised in that two successive gaps (4'₁, 4'₂) have substantially the same inclination.

16. Magnetic head device according to any of claims 1 to 15, characterised in that the non-magnetic interval (5₂) topping the contact block (1'₂) is inclined with respect to the surface of the common contact block (1'₂).

17. Magnetic head device according to claim 16, characterised in that two successive non-magnetic intervals (5₁, 5₂) have substantially the same inclination.

18. Magnetic head device according to any of claims 1 to 17, characterised in that at least one excitation conductor (L, C) is arranged around the common contact block (1₂).

19. Method for realising a device according to any of claims 1 to 18, consisting in:
- depositing a first magnetic layer (21) over part of the contact block (1₂), providing one flank (24') on the contact block (1₂), said layer (21) being designed to form the second pole (P'3) of the second type;
- depositing a layer (22) of a non-magnetic material over the rest of the contact block (1₂) and at least partially over the first layer (22), including the flank (24);
- depositing over the layer (22) of non-magnetic material a second magnetic layer (23) designed to form the first pole (P'2) of the first type, the layer of non-magnetic material (22) being designed to form the non-magnetic interval (5₂), the non-magnetic connection (50) and the gap (4'₁) connected by the first pole (P'2) of the first type;
- machining and polishing the layers (21, 22, 23) so as to even out the first magnetic layer (21);
- cutting the contour of the poles (P'2, P'3) of the non-magnetic interval out of the gap.

20. Method according to claim 19, characterised in that it consists in depositing the first magnetic layer (21) over a magnetic substrate (10) provided with at least one succession of common contact blocks (1₂, 1₃, 1₄).

21. Method according to claim 19, characterised in that it consists in providing a flank (24) of the first magnetic layer (21) between two contact blocks (1₂, 1₃).

22. Method of realisation according to any of claims 19 to 21, characterised in that it consists in giving the non-magnetic layer (22) a lesser thickness than that of the first magnetic layer (21).

23. Method of realisation according to any of claims 19 to 22, characterised in that it consists in arranging at least one excitation conductor (C, L) around the common contact block (1₂).

24. Method of realisation according to claim 23, characterised in that it includes a step which consists in embedding the excitation conductor (C, L) in non-magnetic material.

25. Method of realisation according to any of claims 19 to 24, characterised in that includes a step which consists in interpolating a non-magnetic plate (27) over the common contact block (1₂) prior to the deposition steps.

26. Method of realisation according to any of claims 20 to 25, characterised in that it consists in producing the substrate (10) by assembling together two elemental substrates (10a, 10b) positioned one above the other, the lower elemental substrate (10a) having at least one series of projections (1'₁, 1'₂, 1'₃), the upper elemental substrate (10b) having magnetic pavements (26₁, 26₂, 26₃) separated by non-magnetic material (25), with one magnetic pavement (26₁, 26₂, 26₃) covering a projection (1'₁, 1'₂) at the time that the substrates (10a, 10b) are assembled together.
